# EUROPEAN PATENT APPLICATION

(11) **EP 4 614 369 A1**
(43) Date of publication of application: **10.09.2025**
(21) Application number: 25160721.4
(22) Date of filing: 27.02.2025
(51) Int. Cl.: G06F 21/57, G06F 11/34, H04L 9/40

(54) **AUTONOMOUS THREAT PROTECTION ENGINE IN A SECURITY MANAGEMENT SYSTEM**

(30) Priority: 04.03.2024 US 202418595200
(71) Applicant: Microsoft Technology Licensing, LLC, Redmond, WA 98052 (US)
(72) Inventor: MUSTAFA, ALI, Redmond, 98052 (US); FARSHTEINDIKER, BENYAMIN, Redmond, 98052 (US); VANUNU, GAL, Redmond, 98052 (US); SCHACHTER, LIOR MENACHEM, Redmond, 98052 (US); AVNERY, NIR, Redmond, 98052 (US); YANNAI, SHAI, Redmond, 98052 (US); FELDMAN, SHIR, Redmond, 98052 (US); TELLER, TOMER, Redmond, 98052 (US); YASSOUR, YOAV, Redmond, 98052 (US)
(74) Representative: CMS Cameron McKenna Nabarro Olswang LLP

(57) **Abstract**

Methods, systems, and computer storage media for providing security configuration management using a threat protection engine in a security management system. Security configuration management generally refers to creating, implementing, and maintaining a secure configuration for a computing environment. The threat protection engine provides security configuration management using a security configuration anticipated impact analysis model that is generated based on historical telemetry data. The security configuration anticipated impact analysis model supports generating a security configuration anticipated impact analysis that is a targeted assessment that evaluates implementing a security resolution for a security exposure. Based on the security configuration anticipated impact analysis, security configurations of entities (e.g., hardware, software, and network) are autonomously configured to balance security measures and productivity requirements. A securityproductivity configuration can be defined with a set of parameters for a specified computing environment to customize the balance between the security measures and productivity requirements of the computing environment.

## Description

### BACKGROUND

Users rely on computing environments with applications and services to accomplish computing tasks. Distributed computing systems host and support different types of applications and services in managed computing environments. In particular, computing environments can implement a security management system that provides security configuration management functionality and supports threat protection in the computing environments. For example, cloud security configuration management (CSPM) can include identifying and remediating risk by automating visibility, executing uninterrupted monitoring and threat detection, and providing remediation workflows to search for misconfigurations across diverse cloud computing environments and infrastructure.

### SUMMARY OF THE INVENTION

Various aspects of the technology described herein are generally directed to systems, methods, and computer storage media for, among other things, providing security configuration management using a threat protection engine of a security management system. Security configuration management generally refers to creating, implementing, and maintaining a secure configuration for a computing environment. The threat protection engine provides autonomous security configuration management using a security configuration anticipated impact analysis model that is generated based on historical telemetry data. The security configuration anticipated impact analysis model supports generating a security configuration anticipated impact analysis that is a targeted assessment that evaluates implementing a security resolution for a security exposure.

A security exposure refers to any weakness or vulnerability within a computing environment that could potentially be exploited by malicious actors to compromise the confidentiality, integrity, or availability of data or resources. Security exposures can arise from various factors such as misconfigurations, software bugs, outdated software or firmware, weak authentication mechanisms, or inadequate security controls. These vulnerabilities may be unintentionally introduced during system design, implementation, or maintenance processes, or they may result from evolving cyber threats and attack techniques. Identifying and mitigating security exposures is essential for maintaining a robust security posture and reducing the risk of security incidents or breaches.

The targeted assessment of a security resolution for a computing environment is a focused evaluation that specifically examines the impact of the security resolution on both the security and productivity aspects of the computing environment. This assessment aims to determine how implementing a particular security measure or solution will affect the overall security posture of the system while also considering its potential implications for productivity. The assessment typically involves analyzing various factors such as the effectiveness of the security resolution in mitigating specific security risks, its compatibility with existing productivity workflows and technologies, and any potential trade-offs between security and productivity. By conducting a targeted assessment, organizations can make informed decisions about the implementation of security resolutions, ensuring that they strike the right balance between security and productivity in their computing environment. In this way, based on the security configuration anticipated impact analysis, security configurations of entities can be autonomously configured to balance security measures and productivity requirements.

Conventionally, security management systems are not configured with a comprehensive computing logic and infrastructure to effectively provide security configuration that balance security measures and productivity requirements. For example, cyberattacks can compromise the security of a computing environment; however, even when there exists a known security resolution (e.g., a software patch, a hardware reconfiguration, or mandatory multi-factor authentication) to mitigate or remediate the security exposure, conventional security management systems are not adequately equipped to deploy the security resolution while navigating trade-offs between security and productivity. For example, on the one hand, organizations strive to maintain a productive and collaborative work environment, often necessitating streamlined processes; and on the other hand, robust security measures may introduce complexities, such as additional authentication steps or restrictions, which can impede user workflows. Moreover, while a robust security posture is a proactive approach to mitigate risks and protect against data breaches and cyberattacks, streamlining processes, reducing friction in workflows, and fostering an environment that encourages productivity and innovation can lead to increased efficiency and effectiveness.

A technical solution - to the limitations of conventional security management systems - can include the challenge of generating a security configuration anticipated impact analysis model and generating a security configuration anticipated impact analysis; autonomously configuring entities in computing environment based on the security incident productivity analysis; and providing security management operations and interfaces - via a threat protection engine that supports security configuration management in a security management system. As such, the security management system can be improved based on threat protection engine resources that operate to generate and employ a security configuration anticipated impact analysis model - designed to improve the way a security management system configures security configurations; and the threat protection engine resources further operate to generate a security-productivity configuration for customized balancing of security measures and productivity requirements in a computing environment.

In operation, a threat protection engine accesses historical telemetry data associated with historical security exposures, security resolutions, productivity impacts, and current threat landscapes. Based on the historical telemetry data, a security configuration anticipated impact analysis model is generated. The security configuration anticipated impact analysis model is employed to evaluate and assess potential effects of implementing security resolutions for security exposures in computing environments. The security configuration anticipated impact analysis model is deployed to support generating security configuration impact analyses for security exposures in computing environments.

The threat protection engine then identifies a security exposure associated with a computing environment, and uses a security configuration anticipated impact analysis model associated with historical telemetry data, to generate security configuration anticipated impact analysis for the security exposure and the computing environment. A security-productivity configuration associated with the computing environment is accessed, the security-productivity configuration comprises a set of parameters and settings for defining and customizing a balance between security measures and productivity requirements. The security configuration anticipated impact analysis and the security-productivity configuration are used to generate a security configuration for an entity associated with the computing environment. The entity is configured with a security configuration associated with mitigating or remediating the security exposure.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWING

The technology described herein is described in detail below with reference to the attached drawing figures, wherein:
FIGS. 1A and 1B are block diagrams of an exemplary security management system including a threat protection engine, in accordance with aspects of the technology described herein;
FIG. 2A is a block diagram of an exemplary security management system including a threat protection engine, in accordance with aspects of the technology described herein;
FIG. 2B is a block diagram of an exemplary security management system including a threat protection engine, in accordance with aspects of the technology described herein;
FIG. 2C is a block diagram of an exemplary security management system including a threat protection engine, in accordance with aspects of the technology described herein;
FIG. 3 provides a first exemplary method of providing security configuration management using a threat protection engine, in accordance with aspects of the technology described herein;
FIG. 4 provides a second exemplary method of providing security configuration management using a threat protection engine, in accordance with aspects of the technology described herein;
FIG. 5 provides a third exemplary method of providing security configuration management using a threat protection engine, in accordance with aspects of the technology described herein;
FIG. 6 provides a block diagram of an exemplary distributed computing environment suitable for use in implementing aspects of the technology described herein; and
FIG. 7 is a block diagram of an exemplary computing environment suitable for use in implementing aspects of the technology described herein.

### DETAILED DESCRIPTION OF THE INVENTION

### Overview

Cyberattacks are malicious activities carried out by individuals or groups with the intent to compromise the security of computing environments. These attacks can take various forms, such as malware, phishing, denial-of-service, or exploiting vulnerabilities. The impact of cyberattacks on security is profound, leading to unauthorized access, data breaches, service disruptions, and financial losses. Effective cybersecurity measures are essential to detect, prevent, and mitigate the risks posed by cyber threats.

By way of illustration, misconfigurations in a computing environment pose a significant threat to the security posture, making the computing environment susceptible to various cyberattacks. These errors can inadvertently grant unauthorized access, exposing sensitive data or systems to potential breaches. Incorrectly configured access controls, permissions, or user roles may allow unauthorized users to exploit vulnerabilities. Additionally, misconfigurations can lead to data exposure or leakage, especially when configuring data storage, databases, or encryption is not executed properly. The system becomes more vulnerable to denial of service (DoS) attacks if network settings, firewalls, or load balancers are improperly configured.

Insecure configurations may introduce or exacerbate existing vulnerabilities, providing opportunities for attackers to execute malicious code. Email security can be compromised, exposing users to phishing and social engineering attempts, when email servers or filters are poorly configured. Cloud environments are particularly at risk, with improperly configured services, storage, or permissions leading to unauthorized access and potential compromise. Furthermore, misconfigurations may result in non-compliance with industry or regulatory standards, attracting legal and financial repercussions. Conventionally, mitigation involves regular audits, secure configurations, and adherence to best practices for system hardening, maintenance, and continuous monitoring to detect and remediate misconfigurations before exploitation occurs.

Across diverse implementations of computing systems including variations in organization size, industry, and geographical locations, there exists a persistent challenge of remediating misconfigurations. Four key reasons contribute to this challenge. First, the lack of focus is evident due to the multitude of tools and numerous controls distributed across segregated domains without clear ownership and accountability. Second, the application of a "one size fits all" policy, while convenient for maintenance, overlooks the unique needs of each entity, making it difficult to manually manage tailor-made policies at the entity level, including new security policies and exceptions. Third, the manual and time-consuming nature of the remediation process, taking anywhere from weeks to three years for policy implementation, introduces inefficiencies, errors, and a slow response to evolving security threats. Lastly, a significant gap exists between IT and security teams, where IT, responsible for policy implementation, lacks ownership of security risks, resulting in prolonged periods between discovery and remediation. This disconnection perpetuates "cyber friction," hindering the seamless integration of security policies and key risk indicators.

Large and intricate computing environments pose complexities due to the sheer volume of configurations and dynamic changes over time. For example, network segmentation often requires precise and consistent configuration across various network devices and segments. Manual application of network segmentation policies can be challenging, time-consuming, and prone to human error, especially in large and complex network environments. Therefore, automating the process of network segmentation through autonomous processes can ensure consistency, accuracy, and efficiency in implementing and maintaining segmentation policies. Moreover, security systems may generate false positives or negatives, impacting the accuracy of identifying security risks. Contextual understanding is often lacking, making it difficult to differentiate intentional configurations from genuine misconfigurations. Human errors during system setup or modifications contribute to misconfigurations, and intricate interdependencies between system components make tracing the root cause challenging. Regular monitoring, artificial intelligence for anomaly detection, comprehensive audits, and ongoing training are essential components of addressing these limitations. Adopting a holistic approach to security that integrates technological solutions with human processes is crucial for effectively identifying and mitigating misconfigurations that could lead to cyberattacks.

A security management system supports management of security aspects of resources and workloads in computing environments. The security management system can help enable protection against threats, help reduce risk across different types of computing environments, and help strengthen a security posture of computing environments - i.e., security status and remediation action recommendations for computing resources including networks, devices, identities, apps, and cloud resources. For example, the security management system can provide real-time security alerts, centralize insights for different resources, and provide for preventative protection, post-breach detection, and automated investigation, and response.

Conventionally, security management systems are not configured with a comprehensive computing logic and infrastructure to effectively provide security configuration that balance security measures and productivity requirements. For example, cyberattacks can compromise the security of a computing environment; however, even when there exists security resolutions (e.g., antivirus software update, multi-factor authentication, traffic filtering, and encryption protocols) that can be implemented to address security concerns, potential ripple effects and unintended consequences of implementing a security resolution within a computing environment are also of concern. While the security resolution may be effective in mitigating a specific cyber threat, the intricate interdependencies and complexity of the environment make it difficult to predict how other components or processes might be impacted. Implementing a security measure without a comprehensive understanding of the broader system could lead to disruptions, conflicts with existing configurations, or unintended vulnerabilities. Striking a balance between strengthening security and minimizing disruptions requires a nuanced approach, considering not only the immediate threat but also the holistic impact on the entire computing ecosystem. As such, a comprehensive security management system - with an alternative basis for performing security management operations - can improve computing operations and interfaces in security management systems.

Embodiments of the present technical solution are directed to systems, methods, and computer storage media for, among other things, providing security configuration management using a threat protection engine of a security management system. Security configuration management generally refers to creating, implementing, and maintaining a secure configuration for a computing environment. The threat protection engine provides autonomous security configuration management using a security configuration anticipated impact analysis model that is generated based on historical telemetry data. The security configuration anticipated impact analysis model supports generating a security configuration anticipated impact analysis that is a targeted assessment that evaluates implementing a security resolution for a security exposure. In this way, based on the security configuration anticipated impact analysis, security configurations of entities (e.g., hardware, software, and network components) can be autonomously configured to balance security measures and productivity requirements. A security-productivity configuration can be defined with a set of parameters for a specified computing environment to customize the balance between the security measures and productivity requirements of the computing environment. Security configuration management is provided using the threat protection engine that is operationally integrated into the security management system. The security management system supports a threat protection framework of computing components associated with generating a security configuration anticipated impact analysis model and a security configuration anticipated impact analysis, and configuring entities in a computing environment based on the security incident productivity analysis.

In operation, a threat protection engine accesses historical telemetry data associated with historical security exposures, security resolutions, and productivity impacts. Based on the historical telemetry data, a security configuration anticipated impact analysis model is generated. The security configuration anticipated impact analysis model is employed to evaluate and assess potential effects of implementing security resolutions for security exposures in computing environments. The security configuration anticipated impact analysis model is deployed to support generating security configuration impact analyses for security exposures in computing environments.

The threat protection engine then identifies a security exposure associated with a computing environment, and uses a security configuration anticipated impact analysis model associated with historical telemetry data, to generate security configuration anticipated impact analysis for the security exposure and the computing environment. In one embodiment, a security-productivity configuration associated with the computing environment is accessed, the security-productivity configuration comprises a set of parameters and settings for defining and customizing a balance between security measures and productivity requirements. The security configuration anticipated impact analysis is further generated based in part on the security-productivity configuration. Based on the security configuration anticipated impact analysis, an entity associated with the computing environment is configured with a security configuration associated with remediating the security exposure.

At a high level, the threat protection engine can refer to an autonomous attack surface reduction solution that helps customers calibrate or tune their security stack to protect against security threats, while safeguarding productivity, reducing labor constraints, and optimizing time allocation for strategic initiatives, enhancing return on investments, and maximizing the utility of existing tools. Attack surfaces represent exposure of a system, network, or application to potential threats (e.g., identities, applications, cloud resources, network interfaces, software interfaces, authentication mechanisms, application logic, servers, routers, switches, firewalls, load balancers, Domain Name System (DNS) Servers, Storage Area Networks (SANs), database servers, virtualization hosts (Hypervisors), Network Attached Storage (NAS) Devices or endpoints).

The threat protection engine can operate with a security stack that refers to a set of security tools, technologies, and processes that are integrated to work together in layers to provide comprehensive protection against a wide range of cyber threats. The stack typically includes various security solutions that address different aspects of cybersecurity, such as network security, endpoint security, threat intelligence, identity and access management, encryption, and more. Tuning or calibrating a security stack refers to the process of adjusting the settings, configurations, and parameters of various security tools and systems to optimize their performance and effectiveness. The goal of tuning is to enhance the security stack's ability to identify and respond to threats while minimizing false positives and negatives.

The threat protection engine leverages telemetry data including event or security incident telemetry data to assess which security controls may cause adverse productivity impact, and uses predictive logic to infer potential future impacts. By analyzing past signals and applying forward-looking "what if" scenarios, the solution automatically activates all productivity-safe controls across the security stack (Endpoint, Office, Identity, Applications, Cloud). Productivity can be quantified based on different measurements (e.g., performance, usability, organizational context, and user defined metrics).

Telemetry data refers to the information generated by various security systems, devices, and applications within an information technology environment. This data is crucial for monitoring and analyzing the security posture of a system, identifying potential threats or anomalies, and responding effectively to security exposures including security incidents. Telemetry data is collected from diverse sources, such as network devices, servers, endpoint devices, firewalls, intrusion detection systems, and other security resolutions.

A security exposure refers to any weakness or vulnerability within a computing environment that could potentially be exploited by malicious actors to compromise the confidentiality, integrity, or availability of data or resources. Security exposures can arise from various factors such as misconfigurations, software bugs, outdated software or firmware, weak authentication mechanisms, or inadequate security controls. These vulnerabilities may be unintentionally introduced during system design, implementation, or maintenance processes, or they may result from evolving cyber threats and attack techniques. Identifying and mitigating security exposures is essential for maintaining a robust security posture and reducing the risk of security incidents or breaches.

Security exposures can include security incidents, where a security incident refers to any adverse occurrence or violation that poses a threat to the confidentiality, integrity, or availability of an organization's information systems, data, or resources. This can include unauthorized access, data breaches, malware infections, denial-of-service attacks, policy violations, insider threats, and other events that compromise the security posture of an entity. Detection, response, and mitigation are key aspects of managing and addressing security incidents to prevent or minimize potential damage.

The resolution of a security exposure or security incident involves the successful mitigation, containment, and remediation of the issues or threats that led to the security exposure or security incident. It includes implementing corrective measures to restore the affected systems or data to a secure state. The resolution process aims to eliminate vulnerabilities, prevent further unauthorized access or damage, and restore normalcy to the organization's information systems. This may involve patching vulnerabilities, removing malware, updating security configurations, and implementing additional safeguards to prevent similar incidents in the future. The resolution phase is crucial for minimizing the impact of the incident and ensuring the organization's ongoing security.

The threat protection engine operates based on a threat protection framework that supports balancing security and productivity in a computing environment. Balancing security and productivity can be based in part on user-defined security-productivity configuration having security parameters and productivity parameters. A security-productivity configuration refers to a set of parameters and settings within a computing environment that allows users to define and customize the balance between security measures and productivity requirements. This configuration recognizes the inherent tradeoffs between implementing robust security protocols and ensuring efficient, user-friendly workflows. Users can make selections and adjustments based on their specific needs and preferences, determining how security features are implemented to minimize disruptions to productivity. It involves finding an optimal equilibrium where security is maintained at a satisfactory level without excessively impeding users' ability to perform their tasks efficiently.

Productivity parameters pertain to the settings or conditions that are defined to optimize and support the efficient functioning and output of individuals or systems within an organization. These parameters are designed to enhance productivity, collaboration, and overall performance. Examples of productivity parameters include network bandwidth allocation, collaboration tools settings, user interface customization, task automation configurations, and resource allocation policies. Security parameters refer to the specific settings, configurations, or conditions established to enhance and maintain the security of a system, network, or application. These parameters are implemented to safeguard against potential threats, vulnerabilities, or unauthorized access. Examples of security parameters include firewall rules, access control lists (ACLs), encryption protocols, intrusion detection system (IDS) configurations, password policies, and security group settings.

Operationally, the threat protection engine uses the security-productivity configuration to support autonomous configuration. Autonomous configuration refers to the ability of the threat protection engine to automatically adjust and optimize configuration settings without requiring direct human intervention. Autonomous configuration involves the automatic detection and remediation of misconfigurations, vulnerabilities, or security exposures across devices or systems within an organization's network. This process typically relies on predefined rules, policies, or algorithms that govern how the system responds to detected issues, as described herein. Autonomous configuration enables continuous monitoring and adjustment of configurations to maintain security posture, enhance resilience against cyber threats, and ensure compliance with security policies and best practices. An intelligent algorithmic approach is employed to dynamically adjust security and productivity components based on observed system features and the user-defined security-productivity configuration. The system autonomously interprets contextual cues and adjusts its parameters to implement trade-offs between security and productivity.

The threat protection engine supports continuous monitoring of a computing environment for security exposures and automatically mitigates or remediates security exposures operates through a combination of monitoring, detection, and response mechanisms. For example, the threat protection engine continuously scans devices within the computing environment to identify any security exposures or vulnerabilities, such as misconfigurations, outdated software, or unauthorized access. When a security exposure is detected, the threat protection engine triggers an automated response to remediate the issue, using techniques described herein. This response could involve applying patches, adjusting configurations, blocking malicious activities, or isolating compromised devices from a network associated with the computing environment.

Once the remediation action is taken, the threat protection engine continues to monitor the devices to ensure that the security exposure remains mitigated. If the same security exposure reoccurs on the same or different devices, the system applies the remediation action again autonomously, without requiring manual intervention. This continuous cycle of monitoring, detection, and automated response helps maintain the security posture of the computing environment and reduces the risk of security incidents caused by known vulnerabilities or exposures.

For example, during periods of heightened security threats (e.g., a surge in phishing attacks targeting employees within a corporate environment - employees might receive deceptive emails attempting to trick them into revealing sensitive information or credentials) the system may automatically increase security measures (e.g., mandatory multi-factor authentication (MFA) for all user logins) even if it results in a temporary reduction in productivity. Conversely, during low-risk periods, the system might relax certain security protocols to optimize productivity.

The security system could adapt its behavior based on real-time threat assessments. If an unusual activity is detected, the system might automatically enhance security measures, such as requiring additional authentication steps or limiting access to sensitive data. This dynamic security system aims to find an optimal balance between maintaining robust security and facilitating productivity by autonomously adjusting its parameters in response to the observed security and productivity requirements.

The threat protection engine calculates autonomously how to configure a security configuration so that the organization will be as protected as possible. The security configuration can be associated with security configuration controls that include measures and strategies employed to explicitly specify what is permitted or trusted within a system or network. For example, selecting exclusions, allow-lists, correct configuration of WDAC, and firewall policies, etc. This technical solution allows for the implementation of hyper-granular security measures and opens the path for global automated responses to ongoing security threats, including zero-day attacks. The technical solution also supports applying tight granular security for automated response in zero-days.

In operation, the threat protection engine supports historical modeling; granular productivity impact analysis; and autonomous and continuous granular enforcement. The threat protection engine assesses past telemetry and identifies adverse impact based on telemetry data, correlates signals from different sources to create accurate productivity impact analysis. The threat protection engine autonomously controls different security controls on a device level. In this way, the threat protection engine supports collecting telemetry data from multiple data points; data aggregation and enrichment; entity evaluation for configuration; security configuration deployment; and continuous monitoring of productivity impact.

The threat protection engine collects telemetry data from multiple data points that are associated with difference data sources. A data source can refer to any location, system, or process from which data is collected or retrieved. Data sources can take diverse forms, including databases, files, APIs (Application Programming Interfaces), cloud services, sensors, or even manual data entry. Data sources can specifically be associated with a security management system, service, or application or third party tools that support pre- and post-breach defense and natively coordinates detection, prevention, investigation, and response across endpoints, identities, email, cloud resources and applications to provide integrated protection against sophisticated attacks. Data points can be endpoints that are a focal point for security measures and protections, as they are potential entry points for cyber threats. Endpoint security involves implementing measures to safeguard these devices from malware, unauthorized access, and other security risks. Data points can be associated with agents installed on virtual machines.

Data points can be associated with telemetry data including information about the performance, usage, and health of applications, systems, or devices. This data is collected in real-time or near-real-time, allowing organizations to gain insights into how their products or services are being used, identify issues, and make informed decisions for improvements. For example, telemetry data can be retrieved from a central directory service, where directory services enables efficient identity management by maintaining user accounts, groups, and associated attributes. Telemetry data can further include cloud logs associated with controls relevant to cloud resources including a range of crucial security controls to safeguard data, applications, and infrastructure.

The threat protection engine further supports data aggregation and enrichment. Raw telemetry is aggregated and enriched using multiple contextualized enrichers. Enriching the telemetry adds context to the raw data. For example, security data encompasses logs, alerts, and events generated by diverse systems and security tools. The objective of contextualized enrichers is to augment this data with additional context and details, thereby facilitating a more comprehensive understanding and analysis of security incidents. This enrichment could involve adding information such as user details, device context, network specifics, threat intelligence, and historical data. By providing a more complete picture of the security landscape, contextualized enrichers empower security analysts to make informed decisions, enhance threat detection, streamline incident response, and bolster overall cybersecurity effectiveness.

By way of illustration, a contextual enricher could involve integrating information from various sources such as network logs, user activity data, and threat intelligence feeds. For example, suppose the threat protection engine identifies a potential security vulnerability in a critical application based on anomaly detection algorithms analyzing network traffic. The contextual enricher could then augment this information with data on the application's importance to business operations, its usage patterns, and the potential impact of a security incident on productivity. By correlating security events with contextual data, the threat protection engine can provide a more comprehensive understanding of the security posture and help evaluate the potential productivity impact of remediation actions. This enriched insight allows the threat protection engine and security teams to prioritize and respond effectively to security threats while considering their implications on productivity within the computing environment.

Moreover, enriching the telemetry data creates correlation between events. For example, identifying remote devices in network events that are collected from a device or a cloud resource is a crucial part of contextualize an event to be able to understand network topology and behavior. Another example would be adding the organizational context of a user. When telemetry from an application or endpoint is received, determining the user context (e.g., team, role, or org) enables creating a profile for each entity and creates a more fine-grained security configuration. Moreover, the threat protection engine can contextualize telemetry data based on usage data internal or external to the organization. For example, controls that threat protection engine knows are safe to configure based on crowd sourcing can be applied to a specific organization. As such, context for the application can be based on crowd sourcing, while the threat protection engine only allows specific paths, network routes, or DNS resolution based on the internal usage of an organization.

The threat protection engine performs entity evaluation for configuration - it evaluates what entities are safe to configure. Each entity or group of entities is unique in terms of how they operate. The threat protection engine analyzes each entity independently and evaluates which security controls can be configured on them. The threat protection engine may employ a contextual similarity-based assessment when there is not enough historical data about a particular entity that can support performing a security operation on the entity. For example, the threat protection engine may encounter a misconfigured VM with insufficient contextual information to determine the appropriate remediation action. However, leveraging its capabilities, the threat protection engine conducts a search across other VMs within the same environment to find similar instances based on predefined criteria such as OS type, application stack, or network configuration. It identifies several VMs with similar characteristics and assesses their security postures. If the engine finds a similar VM that has undergone the same misconfiguration and has successfully resolved it in the past, it may apply the same remediation action to the original VM, assuming a high degree of similarity. Conversely, if no suitable match is found or if the similarity threshold is not met, the threat protection engine may refrain from performing the security operation, opting for further investigation or manual intervention. In this way, the threat protection engine autonomously determines security configurations and what entities can be configured based on telemetry and contextualized data, per entity or group. For example, the threat protection engine determines if a specific security control can be enabled safely without impacting the productivity of the application or user.

The threat protection engine may employ a contextual similarity-based assessment based on organizational context, data context, - alone, or in combination with entity context (e.g., entity properties as described above). The threat protection engine leverages organizational context, data context, and entity context to make informed decisions even when historical information is limited. Organizational context encompasses factors such as industry regulations, organizational policies, and security best practices tailored to the specific organization's environment. Data context involves understanding the sensitivity, criticality, and usage patterns of the data being accessed or manipulated within the organization's infrastructure. Entity context refers to the attributes and behavior of individual entities within the environment, including users, devices, and applications. For example, a first user may be the owner of an entity, and the first user is on the same team as a second user. The threat protection engine may employ contextual information from the second user and other related users (e.g., team, groups, and people) associated with the first user.

Productivity can be measured by different measurements. For example, a performance measurement of an entity (e.g., CPU, memory usage; throughput or resource consumption of applications or cloud resources of an entity). A usability measurement that is defined as is used before and after the security configuration of the entity is initialized. For example, creating a network segmentation on different protocols can harm the usage of a user if a security configuration blocks network traffic. Organizational context measurement can refer to a changed user role inside the organization based on the security configuration. For example, a specific security configuration can adversely impact co-workers, which may be an indication for the threat protection engine to disable the security configuration. User defined metrics measurement can be measured to determine if a security configuration should or should not be applied or maintained for an entity.

The threat protection engine supports security configuration deployment, in that, upon a determination that a security configuration should be applied to entities, the threat protection engine can push the security configuration through security pipelines associated with the entities. For example, the threat protection engine selects a security configuration pipeline associated the entity and communicates a security configuration for the entity via the security configuration pipeline. The security configuration can include instructions for applying the security configuration and the security configuration or entity can be associated with a security enforcement mechanism that applies and enforces the security configuration. The threat protection engine can operate in real-time or near-real-time to continuously monitor data and events within a computing environment, swiftly detecting any anomalies or security threats as they occur. The threat protection engine employs automated processes and algorithms to analyze incoming data streams, identify potential security issues, and trigger immediate responses or interventions to mitigate risks. Utilizing techniques described herein (e.g., statistical analysis, machine learning and artificial intelligence) the threat protection engine can adapt and evolve its threat detection capabilities over time, ensuring rapid and effective responses to emerging security threats. Additionally, it may integrate with other security tools and systems to provide comprehensive protection across various layers of the computing environment.

The threat protection engine supports continuous monitoring of productivity impact. For example, after enabling a security control, the threat protection engine monitors performance and usability issues and blocked events on the device that may be caused by the security configuration. If a potential productivity impact is identified, the system alerts the security admin about a potential issue and provides contextualized insights for the issue.

A contextualized insight for productivity impact can refers to a detailed understanding or analysis of how a particular event, action, or change in a computing environment could affect productivity. It takes into account various contextual factors such as the nature of the event or change, the specific tasks or processes involved, the users or stakeholders affected, and the broader organizational objectives. For example, if a security measure is proposed to be implemented, a contextualized insight for productivity impact would involve assessing how it might impact the efficiency of workflow processes, the ability of users to perform their tasks, and overall business productivity. This insight provides valuable information for decision-making, allowing organizations to weigh the potential benefits of security measures against their impact on productivity before implementation. Contextualized insights might include which other assets were impacted in the same way. Contextualized insights can also include any threats that are connected to the impact that happened. Other variations and combinations of contextualized insights are contemplated.

Finally, a security administrator can be given some control over the rollout and revert of security controls in their environment. Rollout controls facilitate the structured and gradual implementation of changes, ensuring that updates or configurations are deployed in a controlled manner. These controls typically involve phased deployments, testing in staging environments, versioning, and ongoing monitoring to detect and mitigate any adverse effects. Conversely, revert controls serve as a safety net by allowing security administrators to quickly undo changes in the event of unexpected issues or adverse impacts on the environment. Revert controls may include automated rollback procedures, backup and restore mechanisms, version control systems, or manual intervention to restore the environment to a stable state. In this way, the threat protection engine enables security configuration management for different types of computing environments without any human intervention. The threat protection engine operates based on an adaptive or dynamic model that continuously gathers data from its environment, analyzes it in real-time, and adjusts its behavior or parameters accordingly. The threat protection engine autonomously responds to changes in input data or conditions based on constantly monitoring and adjusting aspects of the computing environment.

The threat protection engine can further be described by way of illustration with regard to identities. A user identity can refer to a representation of a user within a computing environment, where the identity includes attributes and credentials associated with the user (e.g., username, password, roles, permissions, and personal information). A user identity can be used to authenticate individuals and authorize access to resources and services within the system. The threat protection engine can operate to autonomously and proactively identify and remediate security exposure or misconfigurations associated with identities. Using techniques described herein (e.g., combination of rule-based logic and advanced analytics associated with security and productivity tradeoffs), the threat protection engine can continuously scan for various types of identity-related security exposures or misconfigurations (e.g., unused privileges, stale accounts, or identities with access to critical assets). Upon detection, the threat protection engine automatically initiates corrective actions - based on security-productivity impact analysis - associated with reconfiguring the identity. A security configuration generated based on the security-productivity impact analysis can be automatically performed (e.g., initiating corrective actions, which may include revoking unnecessary privileges, disabling or removing stale accounts, or adjusting access permissions for high-risk identities). By autonomously addressing security exposures and misconfigurations in real-time, the system helps bolster security posture and reduces the likelihood of security incidents stemming from identity-based configuration errors or vulnerabilities.

Advantageously, the embodiments of the present technical solution include several inventive features (e.g., operations, systems, engines, and components) associated with a security management system having a threat protection engine. The threat protection engine supports threat protection engine resources that support generating a security configuration anticipated impact analysis model and generating a security configuration anticipated impact analysis; autonomously configuring entities in computing environment based on the security incident productivity analysis; and providing security management operations and interfaces - via a threat protection engine that supports security configuration management in a security management system. The threat protection engine resources are a solution to a specific problem (e.g., limitations in autonomously providing security configurations that balance security measures and productivity requirements for a computing environment). The security-productivity configuration provides a data structure for storing and retrieving customized settings for parameters associated with balancing of security measures and productivity requirements in a computing environment. Moreover, a security configuration anticipated impact analysis is generated for a computing environment, and entities associated with the computing environment are autonomously configured with security configurations associated with remediating a security incident.

### Example Systems and Operations

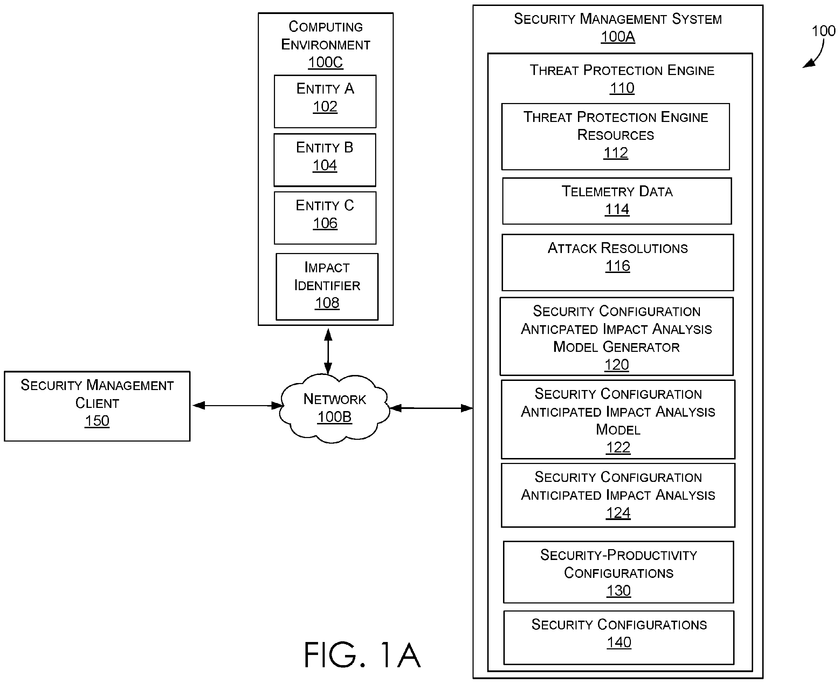

Aspects of the technical solution can be described by way of examples and with reference to FIGS. 1A - 1B. FIG. 1A illustrates a cloud computing environment (system) 100, security management system 100A, network 110B, and computing environment 100C with entity A 102, entity B 104, entity C 106, and impact identifier 108. The security management system 100A includes threat protection engine 110 with threat protection engine resources 112, telemetry data 114, attack resolutions 116; security configuration anticipated impact analysis model generator 120, security configuration anticipated impact analysis model 122, and security configuration anticipated impact analysis 124; security-productivity configurations 130 and security configurations 140; and security management client 150.

The cloud computing environment 100 provides computing system resources for different types of managed computing environments. For example, the cloud computing environment 100 supports delivery of computing services - including servers, storage, databases, networking, and security intelligence. The computing environment 100C can refer to the entire set of hardware, software, network resources, and configurations that collectively constitute the infrastructure for running applications and processing data. Computing environment 100C includes entities (e.g., entity A 102, entity B 104, and entity C 106) that can be autonomously configured using the threat protection engine 110 and techniques described herein. Entities include virtual or physical servers, storage systems, networking components, and other elements necessary to support the deployment and execution of applications in the cloud. Computing environment 100C in the context of cloud computing is characterized by its scalability, flexibility, and the ability to provide on-demand resources. Computing environment 100C allows users to access and utilize computing resources over the internet without the need for extensive local infrastructure. Computing environment 100C in the cloud is managed by a cloud service provider and can be customized based on the specific requirements of users or organizations.

The cloud computing environment 100 supports different types of clients that refer to a device or software application that accesses and interacts with services or resources provided by security management system 100A or computing environment 100C. Clients can access computing components of the cloud computing environment 100 via a network (e.g., network 100B) to perform computing operations. Clients operate using a client-server model, where clients request services or resources from servers, and servers provide those services or resources in response to client requests. Clients initiate communication, and servers respond to those requests, facilitating the exchange of information in a distributed computing environment. A plurality of security management clients (e.g., security management client 150) can include an application or service that supports client-side functionality associated with security management system 100A.

The security management system 100A provides an integrated operating environment based on a threat protection framework of computing components associated with generating security configuration anticipated impact analysis model 122 and generating security configuration anticipated impact analysis 124; and autonomously configuring entities (e.g., entity A 102, entity B 104, and entity C 106) in computing environment 100C based on the security incident productivity analysis 124. For example, a security exposure may exist and the threat protection engine can identify the security exposure, and then use the security configuration anticipated impact analysis model 122 to generate a security configuration anticipated impact analysis that is a targeted assessment that evaluates implementing a security resolution of the security exposure. The security configuration anticipated impact analysis can be used to generate a first security configuration for a first entity, the first security configuration is used to configure the first entity to remediate the security exposure.

The security management system 100A integrates threat protection engine resources 112 into security management system to effectively provide security configuration management, security posture information and remediation information for a computing environment. The threat computing engine resources 112 refers to computing elements (e.g., components, capability, or entities) that collectively empower the threat computing engine operations. The threat computing engine resources 112 encompass a spectrum of computing elements, beginning with the diverse operations the threat computing engine 110 can perform, ranging from complex computations to data manipulations. Interfaces, an integral part of the threat computing engine resources 112, provide the means for both user interaction and seamless integration with external systems, ensuring a dynamic and interactive computing experience. The data facet of the threat computing engine resources 112 involves various types: input data, which is the information provided for processing; processing data, representing the data manipulated during computational tasks; and output data, the results generated by the threat computing engine 110. In this way, the threat computing engine resources 112 support the broader threat protection engine 110 and security management system 100A.

The security management system 100A is designed to provide security configuration management using the threat protection engine 110. The security management system 110A to provide visibility to security status of resources and security posture information in a computing environment. Security posture information refers to a comprehensive overview of an organization's cybersecurity stance and readiness to mitigate potential threats and vulnerabilities. Security posture information encompasses various elements such as the configuration of security controls, adherence to security policies, status of security patches and updates, network security measures, incident response capabilities, and overall risk management strategies. Security posture information can be associated with network, data, and identity resources of a computing environment. Security posture information can include security configuration management information as described herein.

The security management system 100A is responsible for communicating with security management client 150 to operate with the threat protection engine 110 and threat protection engine resources 112. The security management client 150 supports client-side threat protection engine functionality for providing security configuration management in the security management system 110A. For example, the security management client support client-side functionality associated with generating a security configuration anticipated impact analysis model, generating a security configuration anticipated impact analysis, and autonomously configuring entities in computing environment based on the security incident productivity analysis.

The security management client 150 can support accessing a security posture visualization and causing display of the security posture visualization. The secure posture visualization can include data associated with threat protection engine resources and can further include remediation actions associated different alerts - including alerts that are associated with security incidents. The security management client 150 can further support executing a remediation action. In particular, the security posture visualization can include a remediation action for an alert associated with a security incident. The security management client 130 can receive an indication to perform the remediation action associated with a security incident. Based on receiving the indication to execute the remediation action, the security management client 160 can communicate the indication to execute the remediation action to cause execution of the remediation action. The remediation action can address an actual threat or potential threat associated with the security incident and alert. For example, a remediation action can include off-boarding a computing device, disabling a user, quarantining a file; turning off external email, or running an antivirus scan. Other variations and combinations of security posture visualizations with security incidents, alerts, and remediation actions are contemplated with embodiments described herein.

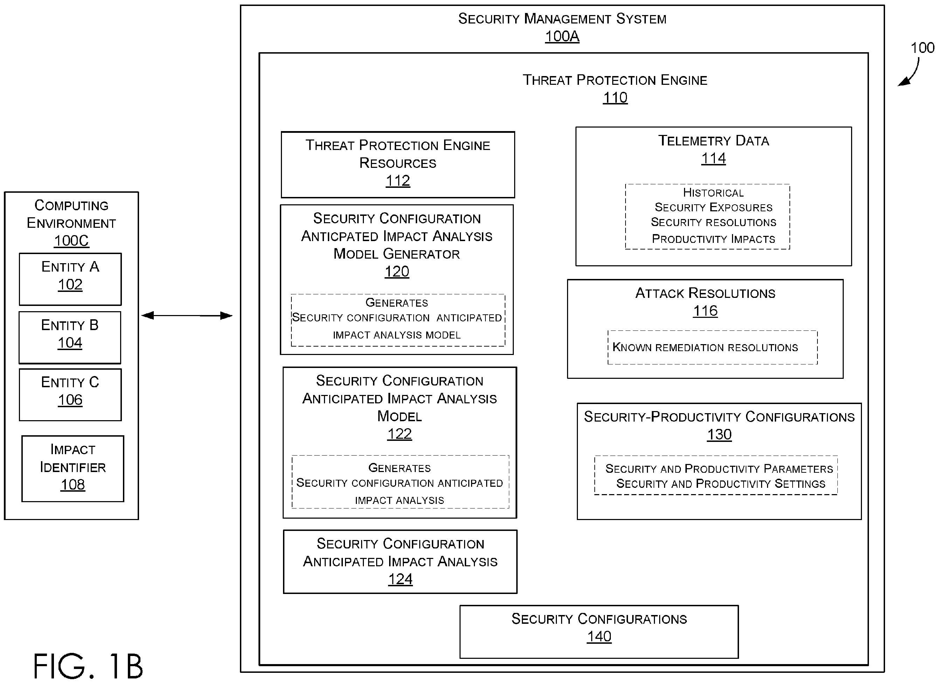

With reference to FIG. 1B, FIG. 1B illustrates cloud computing environment (system) 100, security management system 100A, computing environment 100C with entity A 102, entity B 104, entity C 106, impact identifier 108, threat protection engine 110 with threat protection engine resources 112, telemetry data 114, attack resolutions 116; product impact analysis model generator 120, security configuration anticipated impact analysis model 122, security configuration anticipated impact analysis 124; security-productivity configurations 130 and security configurations 140; and security management client 150.

The threat protection engine 110 supports providing security configuration management using a threat protection engine of a security management system. The threat protection engine 110 is an autonomous attack surface reduction solution that facilitates calibrating or tuning a security stack to protect computing environments (e.g., computing environment 100C). The threat protection engine leverages resources (e.g., threat protection engine resources) and telemetry data (e.g., telemetry data 114) to support assessing which security controls may cause adverse productivity impact, and uses predictive logic to infer potential future impacts.

The threat protection engine 110 operates based on a threat protection framework that supports balancing security and productivity in computing environment 100C. Balancing security and productivity can be based in part on user-defined security-productivity configuration (e.g., security configurations 130) having security parameters and productivity parameters. A security-productivity configuration refers to a set of parameters and settings within a computing environment that allows users to define and customize the balance between security measures and productivity requirements.

The threat protect engine 110 is associated with a security configuration anticipated impact analysis model generator 120. The product impact analysis model 120 supports generating the product impact analysis model 122 using historical telemetry data 114. The historical telemetry data 114 is accessed based on a plurality of data sources associated a cloud computing environment. The plurality of data sources can be with security management applications, directory services, and security agents, and other computing components of the cloud computing system 100. The historical telemetry data 114 is aggregated and enriched using security-productivity contextualization and enriching objects.

The security configuration anticipated impact analysis model generator 120 can be machine learning framework or library that operates as a tool for providing infrastructure, algorithms, capabilities for designing, training, and deploying machine learning models. The machine learning engine can include pre-built functions and APIs that enable building and applying machine learning techniques. The machine learning engine 140 can provide a machine learning workflow from data processing and feature extraction to model training, evaluation, and deployment. Machine learning techniques can be used to evaluate the impact of a security resolution on security and productivity aspects of a computing environment by analyzing historical data and predicting the potential outcomes of implementing the resolution. Other variations and combinations of machine learning and other techniques can be employed for generating a security configuration anticipated impact analysis model.

The security configuration anticipated impact analysis model generator 120 generates the security configuration anticipated impact analysis model that supports evaluating and assessing potential effects of implementing a security resolution for a security exposure in a computing environment. The security configuration anticipated impact analysis model generator 120 generates the security configuration anticipated impact analysis model 122 based on identifying security exposures, security resolutions, and productivity impacts associated with the historical telemetry data; analyzing the security exposures, security resolutions, and productivity impacts to determine patterns in the security incidents, security resolution, and productivity incidents. The security configuration anticipated impact analysis model 122 supports generating security configuration impact analyses for security exposures in computing environments.

The security configuration anticipated impact analysis model generator deploys the security configuration anticipated impact analysis model to support generating security configuration anticipated impact analyses for security exposures in computing environments. The security configuration anticipated impact analyses can be associated with attack resolutions 116, the attack resolutions are security resolutions for security exposures. The security resolutions are known remediations for security exposures. For example, an attack resolution a well-documented and established solution or action (e.g., security configuration) that addresses a specific security vulnerability or threat in a computing environment. It typically involves implementing a fix or countermeasure to mitigate the risk posed by the security issue. Remediation measures can include software patches, configuration changes, updates to security policies or procedures, implementation of security controls or technologies, or any other proactive steps taken to eliminate or minimize the impact of the security issue.

The threat protection engine 110 supports identifying a security exposure associated with a computing environment (e.g., computing environment 110C). The threat protection engine 110 uses the security configuration anticipated impact model 122 to generate a security configuration anticipated impact analysis 124. The security configuration anticipated impact analysis 124 is a targeted assessment that evaluates implementing a security resolution of the security exposure. A targeted assessment is a focused evaluation that specifically examines the impact of a security resolution on both the security and productivity aspects of a computing environment. This assessment aims to determine how implementing a particular security measure or solution will affect the overall security posture of the system while also considering its potential implications for productivity. The assessment typically involves analyzing various factors such as the effectiveness of the security resolution in mitigating specific security risks, its compatibility with existing productivity workflows and technologies, and any potential trade-offs between security and productivity.

By way of illustration, a supervised machine learning model could be trained using past instances where similar security resolutions were implemented. The model would be fed features related to the security resolution, such as the type of security measure, the context of its implementation, and the characteristics of the computing environment. The target variable could represent the observed impact on security and productivity metrics after the implementation. Once trained, the model could then be used to predict the expected impact of a new security resolution based on its features. A targeted assessment can also be conducted using statistical analysis by first defining the specific objectives and metrics to be evaluated. Then, relevant data pertaining to security and productivity aspects of the computing environment are collected. This data can include information on security incidents, system performance, user behavior, and productivity metrics. Statistical techniques such as hypothesis testing, regression analysis, and correlation analysis can then be applied to analyze the relationships between different variables and assess the impact of security resolutions on both security and productivity. For example, regression analysis can be used to determine the relationship between security measures implemented and productivity outcomes, while hypothesis testing can assess whether there is a significant difference in productivity before and after implementing a security resolution. This statistical approach provides a systematic and quantitative method for evaluating the effectiveness of security measures while considering their impact on productivity.

The threat protection engine 110 accesses a security-productivity configuration 130 that is associated with the computing environment. The security-productivity configuration comprises a set of parameters and settings for defining and customizing a balance between security measures and productivity requirements. The threat protection engine 110 uses the security-productivity configuration 130 and a security configuration anticipated impact analysis model 122 associated with historical telemetry data to generate security configuration anticipated impact analysis 124 for the security exposure and the computing environment.

Based on the security configuration anticipated impact analysis 124, the threat protection engine 110 configures a first entity (e.g., entity A 102) associated with the computing environment with a first security configuration associated with remediating the security exposure. The impact identifier 108 supports continuous monitoring of computing environment 100C for productivity impact, security exposures and automatically mitigates or remediates security exposures operates through a combination of monitoring, detection, and response mechanisms. For example, the impact identifier 108 continuously scans entities within the computing environment to identify any productivity impact, security exposures or vulnerabilities, such as misconfigurations, outdated software, or unauthorized access. When a productivity impact or security exposure is detected, the threat protection engine - via the impact identifier - triggers an automated response to remediate the issue, using techniques described herein. This response could involve applying patches, adjusting configurations, blocking malicious activities, or isolating compromised devices from a network associated with the computing environment

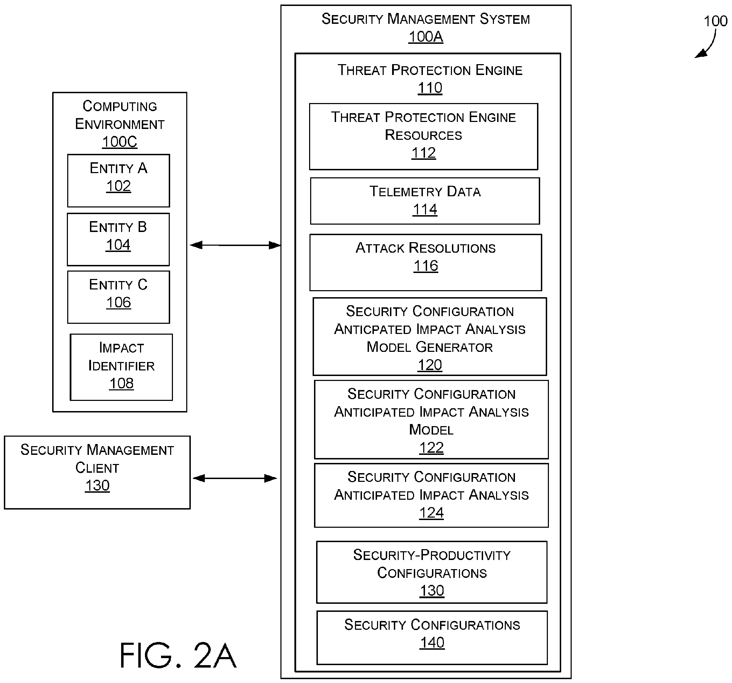

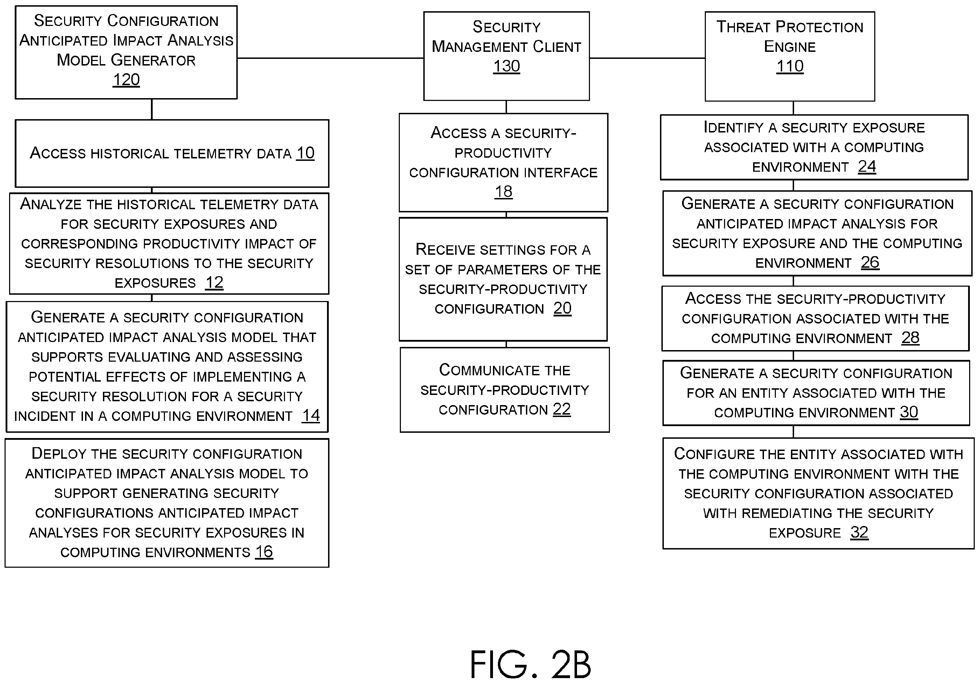

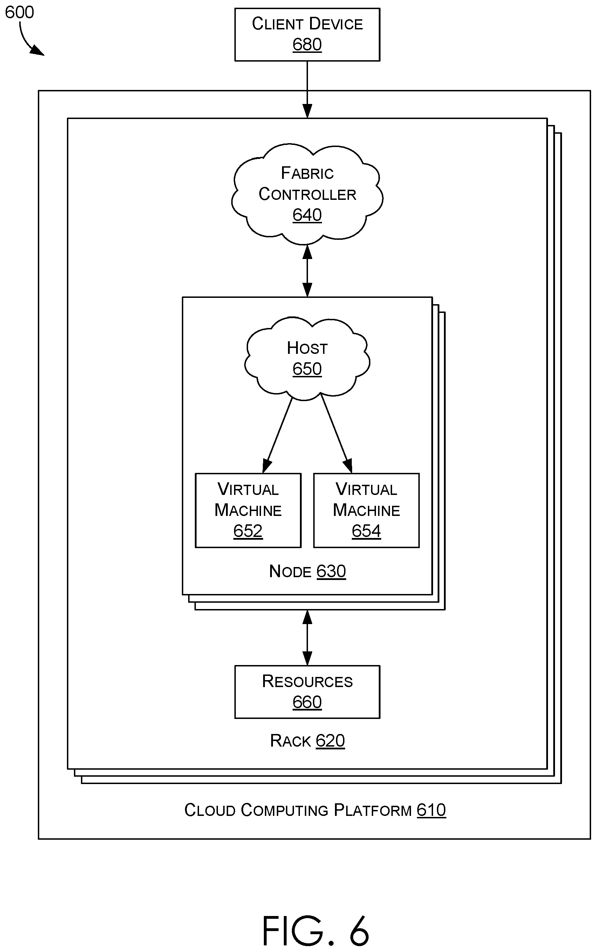

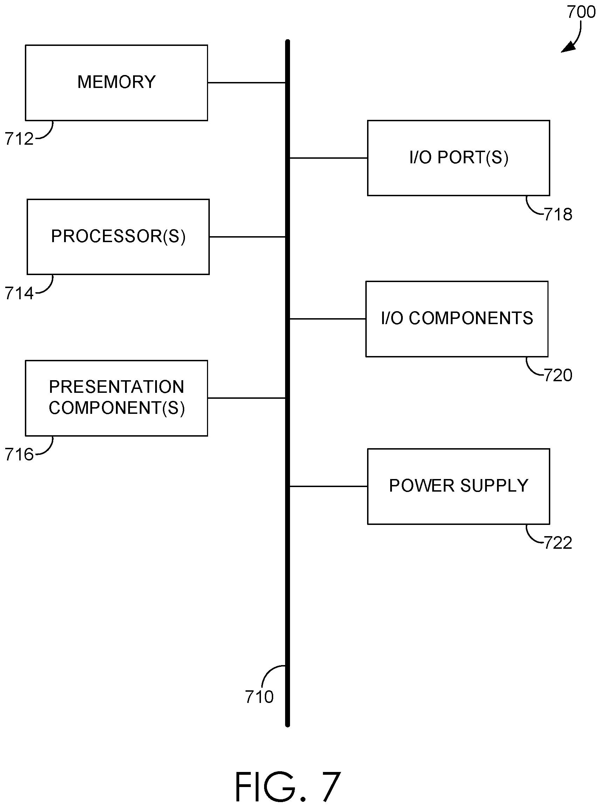

Aspects of the technical solution can be described by way of examples and with reference to FIGS. 2A and 2B. FIG. 2A is a block diagram of an exemplary technical solution environment, based on example environments described with reference to FIG. 6 and 7 for use in implementing embodiments of the technical solution are shown. Generally, the technical solution environment includes a technical solution system suitable for providing the example cloud computing system 100 in which methods of the present disclosure may be employed. In particular, FIG 2A shows a high-level architecture of the cloud computing system 100 in accordance with implementations of the present disclosure. Among other engines, managers, generators, selectors, or components not shown (collectively referred to herein as "components"), the technical solution cloud computing system 100 corresponds to FIG. 1A and 1B.

With reference to FIG. 2A, FIG. 2A illustrates cloud computing environment (system) 100, security management system 100A, computing environment 100C with entity A 102, entity B 104, and entity C 106, impact identifier 108; threat protection engine 110 with threat protection engine resources 112, telemetry data 114, attack resolutions 116; product impact analysis model generator 120, security configuration anticipated impact analysis model 122, security configuration anticipated impact analysis 124; security-productivity configurations 130 and security configurations 140; and security management client 150.

The threat protection engine 110 identifies a security exposure associated with a computing environment (e.g., computing environment 100C). Using a security configuration anticipated impact analysis model (e.g., security configuration anticipated impact analysis model 122) associated with historical telemetry data, the threat protection engine 110 generates a security configuration anticipated impact analysis (e.g., security configuration anticipated impact analysis 124) for the security exposure and the computing environment, the security configuration anticipated impact analysis 124 is a targeted assessment that evaluates implementing a security resolution of the security exposure. The threat protection engine 110 accesses a security-productivity configuration (e.g., security-productivity configuration 130) associated with the computing environment 100C, the security-productivity configuration 130 comprises a set of parameters and settings for defining and customizing a balance between security measures and productivity requirements.

Based on the security-productivity configuration 130 and the security configuration anticipated impact analysis 124, the threat protection engine generates a first security configuration (e.g., security configurations 140) associated with a first entity (e.g., entity A 102, entity B 104, or entity C 106). The threat protection engine 110 configures the first entity associated with the computing environment 110C with the first security configuration associated with remediating the security exposure. Based on the security configuration anticipated impact analysis 124, bypassing configuration of a second entity associated with the computing environment 100C with the security configuration associated with remediating the security exposure.

The security exposure is a weakness or vulnerability within the computing environment that could potentially be exploited by malicious actors or a security incident that is an adverse occurrence or violation that poses a threat to the computing environment, the security exposure is associated with the security resolution that is a known remediation to the security exposure to the computing environment 100C. The security configuration anticipated impact analysis model 122 supports evaluating and assessing potential effects of implementing the security resolution for the security exposure in the computing environment.

Generating the security configuration anticipated impact analysis comprises one or more of the following: evaluating expected performance of one or more entities in the computing environment; determining expected usability of the one or more entities in the computing environment; determining an organizational context of the one or more entities; and evaluating user-defined metrics.

Configuring the first entity associated with the computing environment 100C is based on: selecting a security configuration pipeline associated the first entity; and communicating the first security configuration for the first entity via the security configuration pipeline, the first security configuration comprising instructions for applying the first security configuration, where the first security configuration is associated with a security enforcement mechanism that applies the first security configuration. The security-productivity configuration is associated with parameters associated with security exposures, security resolutions, and productivity impacts identified in historical telemetry data associated with training the security configuration anticipated impact analysis model 122.

The security configuration anticipated impact analysis model 122 is generated based on: accessing historical telemetry data; analyzing the historical telemetry data for security exposures and corresponding productivity impact of security resolutions to the security exposures; generating logic to support executing contextual similarity-based assessment when historical telemetry data for an entity is not sufficient to support generating a security configuration anticipated impact analysis for the entity; generating a security configuration anticipated impact analysis model that supports evaluating and assessing potential effects of implementing a security resolution for a security exposure in a computing environment; and deploying the security configuration anticipated impact analysis model to support generating security configuration impact analyses for security exposures in computing environments.

The historical telemetry data is accessed based on a plurality of data sources associated a cloud computing environment, the plurality of data sources are associated with security management applications, directory services, and security agents, the historical data is aggregated and enriched using security-productivity contextualization and enriching objects.

The threat protection engine 110 or the impact identifier support monitoring productivity impact parameters associated with the first entity; identifying a potential or actual productivity impact issue; generating a contextualized insight for the potential or actual productivity impact issue; generating an alert associated with the potential or actual productivity impact issue; and autonomously updating the first security configuration associated with the first entity. Based on the alert, the threat protection engine 110 autonomously updates the security configurations associated with the entities.

With reference to FIG. 2B, FIG. 2B illustrates a cloud computing system having threat protection engine 110, security management client 130, and security configuration management engine 120.

At block 10, the security configuration anticipated impact analysis model generator accesses historical telemetry data; at block 12 analyzes the historical telemetry data for security exposures and corresponding productivity impact of security resolutions to the security exposures;; at block 14, generates a security configuration anticipated impact analysis model that supports evaluating and assessing potential effects of implementing a security resolution for a security exposure in a computing environment; and at block 16, deploys the security configuration anticipated impact analysis model to support generating security configuration anticipated impact analyses for security exposures in computing environments.

At block 18, the security management client accesses a security-productivity configuration interfaces; at block 20, receive settings for a set of parameters of the security-productivity configuration, the set of parameters and settings define and customize a balance between security measures and productivity requirements; and at block 22, communicates the security-productivity configuration.

At block 24, the threat protection engine identifies a security exposure associated with a computing environment; at block 26, using the security-productivity configuration and a security configuration anticipated impact analysis model associated with historical telemetry data, generates a security configuration anticipated impact analysis for the security exposure and the computing environment, wherein the security configuration anticipated impact analysis is a targeted assessment that evaluates implementing a security resolution of the security exposure; at block 28, accesses the security-productivity configuration associated with the computing environment; and at block 30, generates a security configuration for an entity associated with the computing environment; and block 32, based on the security configuration anticipated impact analysis, configures an entity associated with the computing environment with the security configuration associated with remediating the security exposure.

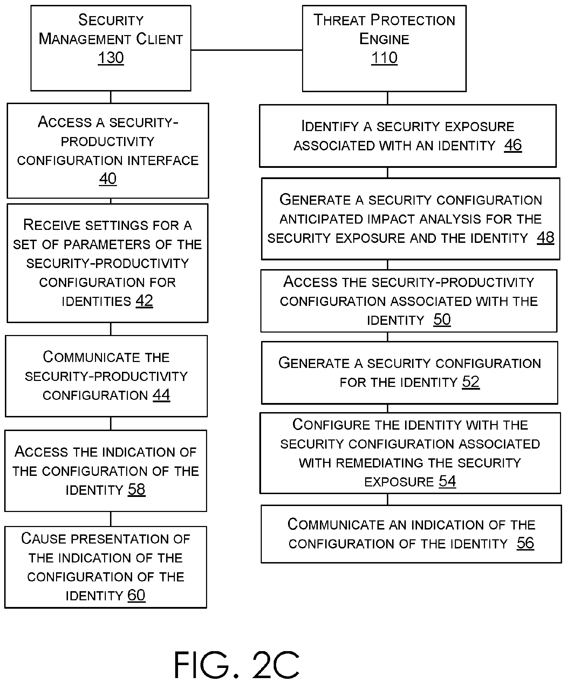

With reference to FIG. 2C, FIG. 2C illustrates a cloud computing system having threat protection engine 110, security management client 130, and security configuration management engine 120. At block 40, the security management client, accesses a security-productivity configuration interface; at block 42 receives settings for a set of parameters of the security-productivity configuration for identities; and at block 44, communicates the security-productivity configuration. At block 46, the threat protection engine 110, generates a security configuration anticipated impact analysis for security exposure and the identity; at block 50, access the security-productivity configuration associated with the identity; at block 52 generates a security configuration for the identity; at block 54, configures the identity with the security configuration associated with remediating the security configuration associated with remediating the security exposure; and at block 56, communicates an indication of the configuration of the identity. At block 58, the security management client accesses the indication of the configuration of the identity; and at block 60, cause presentation of the indication of the configuration of the identity.

### Example Methods

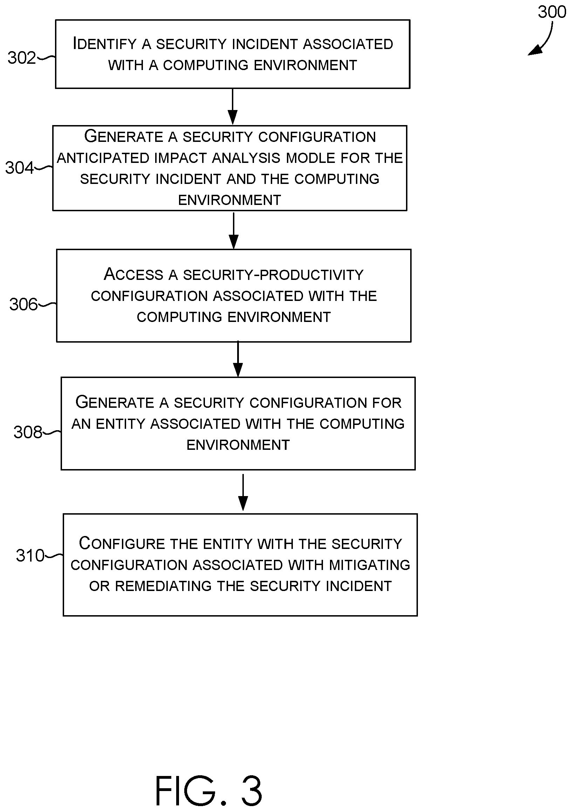

With reference to FIGS. 3, 4, and 5, flow diagrams are provided illustrating methods for providing security configuration management using a threat protection engine in a security management system. The methods may be performed using the security management system described herein. In embodiments, one or more computer-storage media having computer-executable or computer-useable instructions embodied thereon that, when executed, by one or more processors can cause the one or more processors to perform the methods (e.g., computer-implemented method) in the security management system (e.g., a computerized system).

Turning to FIG. 3, a flow diagram is provided that illustrates a method 300 for providing security configuration management using a threat protection engine in a security management system. At block 302, identify a security exposure associated with a computing environment. At block 304, using a security configuration anticipated impact analysis model associated with historical telemetry data, generate a security configuration anticipated impact analysis for the security exposure and the computing environment. At block 306, access a security-productivity configuration associated with the computing environment. At block, 308, based on the security configuration anticipated impact analysis and the security-productivity configuration, generate a security configuration for an entity associated with the computing environment. At block 310, configure the entity with the security configuration associated with mitigating or the remediating the security exposure.

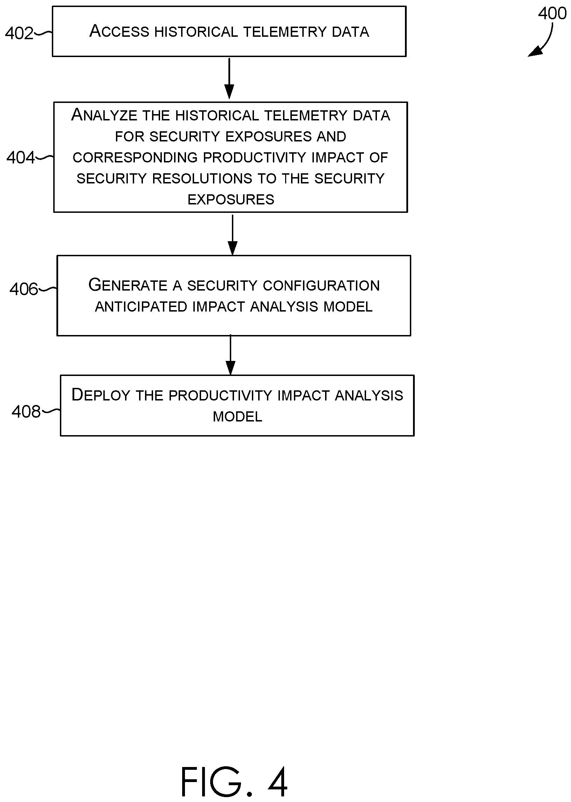

Turning to FIG. 4, a flow diagram is provided that illustrates a method 400 for providing security configuration management using a threat protection engine in a security management system. At block 402, access historical telemetry data. At block 404, analyze the historical telemetry data for security exposures and corresponding productivity impact of security resolutions to the security exposures. At block 406, generate a security configuration anticipated impact analysis model that supports evaluating and assessing potential effects of implementing a security resolution for a security exposure in a computing environment. At block 408, deploy the security configuration anticipated impact analysis model to support generating security configuration anticipated impact analysis for security exposures in computing environments.

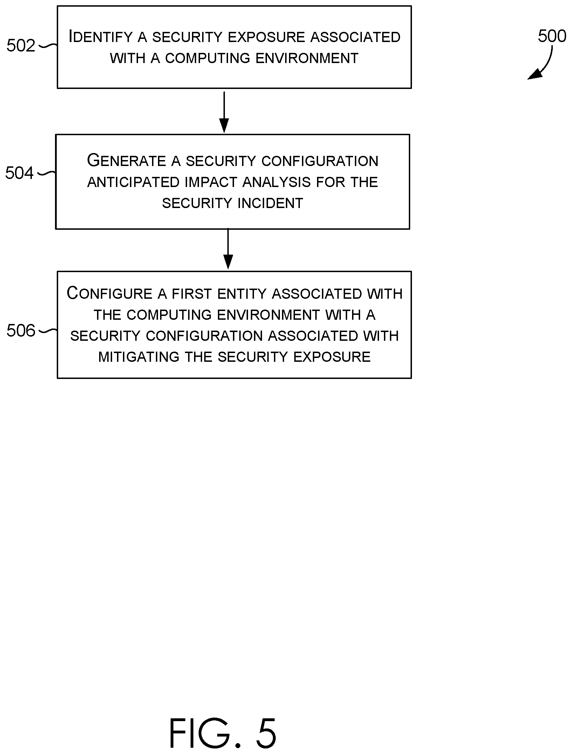

Turning to FIG. 5, a flow diagram is provided that illustrates a method 500 for providing security configuration management using a threat protection engine in a security management system. At block 502, identify a security exposure associated with a computing environment. At block 504, using a security configuration anticipated impact analysis model associated with historical telemetry data, generate a security configuration anticipated impact analysis for the security exposure and the computing environment. At block 506, based on the security configuration anticipated impact analysis, configure a first entity associated with the computing environment with a security configuration associated with remediating the security exposure.

### Technical Improvement

Embodiments of the present invention have been described with reference to several inventive features (e.g., operations, systems, engines, and components) associated with a security management system. Inventive features described include: operations, interfaces, data structures, and arrangements of computing resources associated with providing the functionality described herein relative with reference to a threat protection engine. Functionality of the embodiments of the present invention have further been described, by way of an implementation and anecdotal examples - to demonstrate that the operations for providing the threat protection engine as a solution to a specific problem in security management technology to improve computing operations in security management systems.

By way of example, the threat protection engine supports threat protection engine resources that support generating a security configuration anticipated impact analysis model and generating a security configuration anticipated impact analysis; autonomously configuring entities in computing environment based on the security incident productivity analysis; and providing security management operations and interfaces - via a threat protection engine that supports security configuration management in a security management system. The threat protection engine resources are a solution to a specific problem (e.g., limitations in autonomously providing security configurations that balance security measures and productivity requirements for a computing environment). The security-productivity configuration provides a data structure for storing and retrieving customized settings for parameters associated with balancing of security measures and productivity requirements in a computing environment. Moreover, a security configuration anticipated impact analysis is generated for a computing environment, and entities associated with the computing environment are autonomously configured with security configurations associated with remediating a security incident.

### ADDITIONAL SUPPORT FOR DETAILED DESCRIPTION OF THE INVENTION

### Example Distributed Computing System Environment

Referring now to FIG. 6, FIG. 6 illustrates an example distributed computing environment 600 in which implementations of the present disclosure may be employed. In particular, FIG. 6 shows a high level architecture of an example cloud computing platform 610 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 600 that includes cloud computing platform 610, rack 620, and node 630 (e.g., computing devices, processing units, or blades) in rack 620. The technical solution environment can be implemented with cloud computing platform 610 that runs cloud services across different data centers and geographic regions. Cloud computing platform 610 can implement fabric controller 640 component for provisioning and managing resource allocation, deployment, upgrade, and management of cloud services. Typically, cloud computing platform 610 acts to store data or run service applications in a distributed manner. Cloud computing infrastructure 610 in a data center can be configured to host and support operation of endpoints of a particular service application. Cloud computing infrastructure 610 may be a public cloud, a private cloud, or a dedicated cloud.

Node 630 can be provisioned with host 650 (e.g., operating system or runtime environment) running a defined software stack on node 630. Node 630 can also be configured to perform specialized functionality (e.g., compute nodes or storage nodes) within cloud computing platform 610. Node 630 is allocated to run one or more portions of a service application of a tenant. A tenant can refer to a customer utilizing resources of cloud computing platform 610. Service application components of cloud computing platform 610 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 630, nodes 630 may be partitioned into virtual machines (e.g., virtual machine 652 and virtual machine 654). Physical machines can also concurrently run separate service applications. The virtual machines or physical machines can be configured as individualized computing environments that are supported by resources 660 (e.g., hardware resources and software resources) in cloud computing platform 610. It is contemplated that resources can be configured for specific service applications. Further, each service application may be divided into functional portions such that each functional portion is able to run on a separate virtual machine. In cloud computing platform 610, multiple servers may be used to run service applications and perform data storage operations in a cluster. In particular, the servers may perform data operations independently but exposed as a single device referred to as a cluster. Each server in the cluster can be implemented as a node.

Client device 680 may be linked to a service application in cloud computing platform 610. Client device 680 may be any type of computing device, which may correspond to computing device 600 described with reference to FIG. 6, for example, client device 680 can be configured to issue commands to cloud computing platform 610. In embodiments, client device 680 may communicate with service applications through a virtual Internet Protocol (IP) and load balancer or other means that direct communication requests to designated endpoints in cloud computing platform 610. The components of cloud computing platform 610 may communicate with each other over a network (not shown), which may include, without limitation, one or more local area networks (LANs) and/or wide area networks (WANs).

### Example Computing Environment

Having briefly described an overview of embodiments of the present technical solution, an example operating environment in which embodiments of the present technical solution may be implemented is described below in order to provide a general context for various aspects of the present technical solution. Referring initially to FIG. 6 in particular, an example operating environment for implementing embodiments of the present technical solution is shown and designated generally as computing device 600. Computing device 600 is but one example of a suitable computing environment and is not intended to suggest any limitation as to the scope of use or functionality of the technical solution. Neither should computing device 700 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output ports 718, input/output components 720, and illustrative power supply 722. Bus 710 represents what may be one or more buses (such as an address bus, data bus, or combination thereof). The various blocks of FIG. 7 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 7 is merely illustrative of an example computing device that can be used in connection with one or more embodiments of the present technical solution. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile and/or nonvolatile memory. The memory may be removable, non-removable, or a combination thereof. Exemplary hardware devices include solid-state memory, hard drives, optical-disc drives, etc. Computing device 700 includes one or more processors that read data from various entities such as memory 712 or I/O components 720. Presentation component(s) 716 present data indications to a user or other device. Exemplary presentation components include a display device, speaker, printing component, vibrating component, etc.

I/O ports 718 allow computing device 700 to be logically coupled to other devices including I/O components 720, some of which may be built in. Illustrative components include a microphone, joystick, game pad, satellite dish, scanner, printer, wireless device, etc.

The disclosure presented herein also encompasses the subject matter set forth in the following clauses.

Clause A. A computerized system comprises: one or more computer processors; and computer memory storing computer-useable instructions that, when used by the one or more computer processors, cause the one or more computer processors to perform operations, the operations comprising: identifying a security exposure associated with a computing environment; using a security configuration anticipated impact analysis model associated with historical telemetry data, generating a security configuration anticipated impact analysis for the security exposure and the computing environment, wherein the security configuration anticipated impact analysis is a targeted assessment that evaluates implementing a security resolution of the security exposure; accessing a security-productivity configuration associated with the computing environment, the security-productivity configuration comprises a set of parameters and settings for defining and customizing a balance between security measures and productivity requirements; based on the security-productivity configuration and the security configuration anticipated impact analysis, generating a first security configuration associated with a first entity; and configuring the first entity associated with the computing environment with the first security configuration associated with remediating the security exposure.

Clause B. The system of clause A, wherein the security exposure is a weakness or vulnerability within the computing environment that could potentially be exploited by malicious actors or a security incident that is an adverse occurrence or violation that poses a threat to the computing environment, the security exposure is associated with the security resolution that is a known remediation to the security exposure to the computing environment.

Clause C. The system of clause A or clause B, wherein the security configuration anticipated impact analysis model supports evaluating and assessing potential effects of implementing the security resolution for the security exposure in the computing environment.

Clause D. The system of clauses A, B or C, wherein generating the security configuration anticipated impact analysis comprises one or more of the following: evaluating expected performance of one or more entities in the computing environment; determining expected usability of the one or more entities in the computing environment; determining an organizational context of the one or more entities; and evaluating user-defined metrics.

Clause E. The system of clauses A, B, C or D, wherein configuring the first entity associated with the computing environment is based on: selecting a security configuration pipeline associated the first entity; and communicating the first security configuration for the first entity via the security configuration pipeline, the first security configuration comprising instructions for applying the first security configuration, wherein the first security configuration is associated with a security enforcement mechanism that applies the first security configuration, wherein the security-productivity configuration is associated with parameters associated with security exposures, security resolutions, and productivity impacts identified in historical telemetry data associated with training the security configuration anticipated impact analysis model.

Clause F. The system of clauses A, B, C, D or E, wherein the security configuration anticipated impact analysis model is generated based on: accessing historical telemetry data; analyzing the historical telemetry data for security exposures and corresponding productivity impact of security resolutions to the security exposures; generating logic to support executing contextual similarity-based assessment when historical telemetry data for an entity is not sufficient to support generating a security configuration anticipated impact analysis for the entity; generating a security configuration anticipated impact analysis model that supports evaluating and assessing potential effects of implementing a security resolution for a security exposure in a computing environment; and deploying the security configuration anticipated impact analysis model to support generating security configuration impact analyses for security exposures in computing environments.

Clause G. The system of clauses A, B, C, D, E or F, wherein the operations further comprising: monitoring productivity impact parameters associated with the first entity; identifying a potential or actual productivity impact issue; generating a contextualized insight for the potential or actual productivity impact issue; generating an alert associated with the potential or actual productivity impact issue; and autonomously updating the first security configuration associated with the first entity.

Clause H. One or more computer-storage media having computer-executable instructions embodied thereon that, when executed by a computing system having a processor and memory, cause the processor to perform operations, the operations comprising: accessing historical telemetry data; analyzing the historical telemetry data for security exposures and corresponding productivity impact of security resolutions to the security exposures; generating a security configuration anticipated impact analysis model that supports evaluating and assessing potential effects of implementing a security resolution for a security exposure in a computing environment; and deploying the security configuration anticipated impact analysis model to support generating security configuration impact analyses for security exposures in computing environments.

Clause I. The media of clause H, wherein the historical telemetry data is accessed based on a plurality of data sources associated a cloud computing environment, wherein the plurality of data sources are associated with security management applications, directory services, and security agents, the historical data is aggregated and enriched using security-productivity contextualization and enriching objects.

Clause J. The media of clause H or clause I, wherein generating the security configuration anticipated impact analysis model is based on: identifying security exposures, security resolutions, and productivity impacts associated with the historical telemetry data; analyzing the security exposures, security resolutions, and productivity impacts determining patterns in the security exposures, security resolutions, and productivity impacts; and generating logic to support executing contextual similarity-based assessment when the historical telemetry data for an entity is not sufficient to support generating a security configuration anticipated impact analysis for the entity.

Clause K. The media of clauses H, I or J, wherein the operations further comprises: identifying a security exposure associated with a computing environment; using the security configuration anticipated impact analysis model associated with historical telemetry data, generating a security configuration anticipated impact analysis for the security exposure and the computing environment; and based on the security configuration anticipated impact analysis, configuring an entity associated with the computing environment with a security configuration associated with remediating the security exposure.

Clause L. The media of clause H, I, J or K, wherein generating the security configuration anticipated impact analysis is further based on a security-productivity configuration associated with the computing environment, the security-productivity configuration comprises a set of parameters and settings for defining and customizing a balance between security measures and productivity requirements.

Clause M. The media of clauses H, I, J, K or L, the operations further comprising: monitoring productivity impact parameters associated with the entity; identifying a potential or actual productivity impact issue; generating a contextualized insight for the potential or actual productivity impact issue; and generating an alert associated with the potential or actual productivity impact issue.

Clause N. The media of clauses H, I, J, K, L or M, wherein based on the security configuration anticipated impact analysis, bypassing configuration of a second entity associated with the computing environment with the security configuration associated with remediating the security exposure.

Clause O. A computer-implemented method, the method comprising: identifying a security exposure associated with a computing environment; using a security configuration anticipated impact analysis model associated with historical telemetry data, generating a security configuration anticipated impact analysis for the security exposure and the computing environment; and based on the security configuration anticipated impact analysis, configuring an entity associated with the computing environment with a security configuration associated with remediating the security exposure.

Clause P. The method of clause O, wherein the security configuration anticipated impact analysis model supports evaluating and assessing potential effects of implementing the security resolution for the security exposure in the computing environment.

Clause Q. The method of clause O or clause P, wherein generating the security configuration anticipated impact analysis is further based on a security-productivity configuration associated with the computing environment, the security-productivity configuration comprises a set of parameters and settings for defining and customizing a balance between security measures and productivity requirements.

Clause R. The method of clauses O, P or Q, wherein based on the security configuration anticipated impact analysis, bypassing configuration of a second entity associated with the computing environment with the security configuration associated with remediating the security exposure.

Clause S. The method of clauses O, P, Q or R, the method further comprising: monitoring productivity impact parameters associated with the entity; identifying a potential or actual productivity impact issue; generating a contextualized insight for the potential or actual productivity impact issue; and generating an alert associated with the potential or actual productivity impact issue.

Clause T. The method of clauses O, P, Q, R or S, the method further comprising based on the alert, autonomously updating the security configuration associated with the entity.

Clause U. Methods, systems, and computer storage media for providing security configuration management using a threat protection engine in a security management system. Security configuration management generally refers to creating, implementing, and maintaining a secure configuration for a computing environment. The threat protection engine provides security configuration management using a security configuration anticipated impact analysis model that is generated based on historical telemetry data. The security configuration anticipated impact analysis model supports generating a security configuration anticipated impact analysis that is a targeted assessment that evaluates implementing a security resolution for a security exposure. Based on the security configuration anticipated impact analysis, security configurations of entities (e.g., hardware, software, and network) are autonomously configured to balance security measures and productivity requirements. A security-productivity configuration can be defined with a set of parameters for a specified computing environment to customize the balance between the security measures and productivity requirements of the computing environment.

### Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
identifying (302) a security exposure associated with a computing environment;
using a security configuration anticipated impact analysis model associated with historical telemetry data, generating (304) a security configuration anticipated impact analysis for the security exposure and the computing environment, wherein the security configuration anticipated impact analysis is a targeted assessment that evaluates implementing a security resolution of the security exposure;
accessing (306) a security-productivity configuration associated with the computing environment, the security-productivity configuration comprises a set of parameters and settings for defining and customizing a balance between security measures and productivity requirements;
based on the security-productivity configuration and the security configuration anticipated impact analysis, generating (308) a first security configuration associated with a first entity; and
configuring (310) the first entity associated with the computing environment with the first security configuration associated with remediating the security exposure.

2. The system of claim 1, wherein the security exposure is a weakness or vulnerability within the computing environment that could potentially be exploited by malicious actors or a security incident that is an adverse occurrence or violation that poses a threat to the computing environment, the security exposure is associated with the security resolution that is a known remediation to the security exposure to the computing environment.

3. The system of claim 1 or claim 2, wherein the security configuration anticipated impact analysis model supports evaluating and assessing potential effects of implementing the security resolution for the security exposure in the computing environment.

4. The system of any one of the preceding claims, wherein generating the security configuration anticipated impact analysis comprises one or more of the following:
evaluating expected performance of one or more entities in the computing environment;
determining expected usability of the one or more entities in the computing environment;
determining an organizational context of the one or more entities; and
evaluating user-defined metrics.

5. The system of any one of the preceding claims, wherein configuring the first entity associated with the computing environment is based on:
selecting a security configuration pipeline associated the first entity; and
communicating the first security configuration for the first entity via the security configuration pipeline, the first security configuration comprising instructions for applying the first security configuration, wherein the first security configuration is associated with a security enforcement mechanism that applies the first security configuration, wherein the security-productivity configuration is associated with parameters associated with security exposures, security resolutions, and productivity impacts identified in historical telemetry data associated with training the security configuration anticipated impact analysis model.

6. The system of any one of the preceding claims, wherein the security configuration anticipated impact analysis model is generated based on:
accessing historical telemetry data;
analyzing the historical telemetry data for security exposures and corresponding productivity impact of security resolutions to the security exposures;
generating logic to support executing contextual similarity-based assessment when historical telemetry data for an entity is not sufficient to support generating a security configuration anticipated impact analysis for the entity;
generating a security configuration anticipated impact analysis model that supports evaluating and assessing potential effects of implementing a security resolution for a security exposure in a computing environment; and
deploying the security configuration anticipated impact analysis model to support generating security configuration impact analyses for security exposures in computing environments.

7. The system of any one of the preceding claims, the operations further comprising:
monitoring productivity impact parameters associated with the first entity;
identifying a potential or actual productivity impact issue;
generating a contextualized insight for the potential or actual productivity impact issue;
generating an alert associated with the potential or actual productivity impact issue; and
autonomously updating the first security configuration associated with the first entity.

8. One or more computer-storage media having computer-executable instructions embodied thereon that, when executed by a computing system having a processor and memory, cause the processor to perform operations, the operations comprising:
accessing (402) historical telemetry data;
analyzing (404) the historical telemetry data for security exposures and corresponding productivity impact of security resolutions to the security exposures;
generating (406) a security configuration anticipated impact analysis model that supports evaluating and assessing potential effects of implementing a security resolution for a security exposure in a computing environment; and
deploying (408) the security configuration anticipated impact analysis model to support generating security configuration impact analyses for security exposures in computing environments.

9. The media of claim 8, wherein the historical telemetry data is accessed based on a plurality of data sources associated a cloud computing environment, wherein the plurality of data sources are associated with security management applications, directory services, and security agents, the historical data is aggregated and enriched using security-productivity contextualization and enriching objects.

10. The media of claim 8 or claim 9, wherein generating the security configuration anticipated impact analysis model is based on:
identifying security exposures, security resolutions, and productivity impacts associated with the historical telemetry data;
analyzing the security exposures, security resolutions, and productivity impacts determining patterns in the security exposures, security resolutions, and productivity impacts; and
generating logic to support executing contextual similarity-based assessment when the historical telemetry data for an entity is not sufficient to support generating a security configuration anticipated impact analysis for the entity.

11. The media of any one of the preceding claims, the operations further comprising:
identifying a security exposure associated with a computing environment;
using the security configuration anticipated impact analysis model associated with historical telemetry data, generating a security configuration anticipated impact analysis for the security exposure and the computing environment; and
based on the security configuration anticipated impact analysis, configuring an entity associated with the computing environment with a security configuration associated with remediating the security exposure.

12. The media of any one of the preceding claims, wherein generating the security configuration anticipated impact analysis is further based on a security-productivity configuration associated with the computing environment, the security-productivity configuration comprises a set of parameters and settings for defining and customizing a balance between security measures and productivity requirements.

13. The media of any one of the preceding claims, the operations further comprising:
monitoring productivity impact parameters associated with the entity;
identifying a potential or actual productivity impact issue;
generating a contextualized insight for the potential or actual productivity impact issue; and
generating an alert associated with the potential or actual productivity impact issue.

14. The media of any one of the preceding claims, wherein based on the security configuration anticipated impact analysis, bypassing configuration of a second entity associated with the computing environment with the security configuration associated with remediating the security exposure.

15. A computer-implemented method, the method comprising:
identifying (502) a security exposure associated with a computing environment;
using a security configuration anticipated impact analysis model associated with historical telemetry data, generating (504) a security configuration anticipated impact analysis for the security exposure and the computing environment; and
based on the security configuration anticipated impact analysis, configuring (506) an entity associated with the computing environment with a security configuration associated with remediating the security exposure.
